(19) **Europäisches Patentamt European Patent Office Office européen des brevets**

(11) **EP 4 657 373 B1**

(12) **EUROPEAN PATENT SPECIFICATION**

(45) Date of publication and mention
of the grant of the patent:
**25.03.2026 Bulletin 2026/13**

(21) Application number: **24178864.5**

(22) Date of filing: **29.05.2024**

(51) International Patent Classification (IPC):
*G06T 7/20* (2017.01)   *G06T 7/73* (2017.01)
*G06T 7/70* (2017.01)   *G06T 5/70* (2024.01)
*G06T 7/277* (2017.01)

(52) Cooperative Patent Classification (CPC):
**G06T 5/70; G06T 7/20; G06T 7/277; G06T 7/70;
G06T 7/73; G06T 7/75;** G06T 7/246;
G06T 2207/10016; G06T 2207/20076;
G06T 2207/20182; G06T 2207/30241

(54) **A METHOD AND APPARATUS FOR TRACKING AN OBJECT IN A SEQUENCE OF IMAGE FRAMES**

VERFAHREN UND VORRICHTUNG ZUR VERFOLGUNG EINES OBJEKTS IN EINER BILDRAHMENSEQUENZ

PROCÉDÉ ET APPAREIL DE SUIVI D'UN OBJET DANS UNE SÉQUENCE DE TRAMES D'IMAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**03.12.2025 Bulletin 2025/49**

(73) Proprietor: **Axis AB
223 69 Lund (SE)**

(72) Inventors:
• **Jönsson, Andreas
22369 LUND (SE)**
• **Hök, Jakob
22369 LUND (SE)**

(74) Representative: **AWA Sweden AB
Box 5117
200 71 Malmö (SE)**

(56) References cited:
WO-A1-2015/095754   US-A1- 2012 154 579
US-A1- 2019 050 694

**Description**

Technical field

The present invention relates to the field of tracking objects. In particular, it relates to a method and an apparatus for tracking an object in a sequence of image frames.

Background

In order to track an object depicted by a video camera it is common to use a tracking filter, such as a Kalman filter. The purpose of the filter is to filter a set of noisy detections of the object in image frames of the video to output a smooth object track. These filters include a motion model which models how a state of the object, such as position and velocity, evolves from one time point to another. When the filter is used, the motion model is used to predict a state of the object in a current image frame from the state of the object in a previous image frame. The predicted state is then updated in view of an object detection in the current image frame. In cases where several objects are detected and tracked in the current image frame, it is also decided which object detection in the current image frame should be associated to update which track. This type of object tracking is known as tracking-by-detection.

The motion model of the tracking filter is often a linear motion model, which models the evolution of the state of the object over time, such as from one image frame to the next, by a linear function. Moreover, in order to account for unknown deviations from the linear motion model, the tracking filter includes a noise term referred to as process noise. The process noise dictates how much the tracking filter is allowed to deviate from the linear motion model, i.e., it describes the uncertainty of the linear motion model. When the process noise is low, only a small deviation from the linear motion model is allowed and the filter will struggle to track objects which move non-linearly. This can be a problem since in many real-world situations the objects move non-linearly or their linear motion becomes non-linear when mapped to the image plane. For example, this may happen in fisheye cameras or when an object moves towards or away from the camera. As a result, a tracker using a linear motion model may lose track of the objects.

One solution to this problem is to increase the process noise of the filter to allow the filter to deviate more from the linear motion model. However, a too high process noise may lead to other problems, especially when the object detections are noisy or in scenes where there are many objects. For example, it increases the risk of erroneously associating object detections to tracks, leading to so-called identity switches where a track first follows one object and then, erroneously, suddenly starts to follow another object.

There is thus room for improvements.

US2012154579A1 relates to performing motion segmentation in images to detect one or more moving objects, and tracking the one or more moving objects. In one embodiment, the result of several tracking algorithms, such as a meanshift tracker and a Kanade-Lucas-Tomasi feature tracker are merged to improve that tracking performance.

Summary of the invention

In view of the above, it is thus an objective of the present invention to mitigate the above problems and adapt the process noise to achieve an improved object tracking performance.

According to a first, second, and third aspect of the inventive concept, the above objective is achieved by a method, an apparatus, and a non-transitory computer-readable medium, respectively, for tracking an object in a sequence of image frames as defined by the independent claims. Advantageous embodiments are defined by the dependent claims.

According to the inventive concept, the process noise used by a first tracker, which relies on a tracking-by-detection principle, when tracking an object is adjusted over time to increase or decrease the uncertainty of the linear motion model to accommodate a higher or lower deviation from the linear motion assumption when needed. In order to do so, an additional second tracker which relies on the principle of tracking areas of motion in the image frames is used. The inventors have realized that a motion tracker typically is better at estimating non-linear motion than a traditional tracking-by-detection tracker which uses a linear motion model. Additionally, it has much less risk of confusing moving objects and static objects. As a consequence, a level of agreement between the output of the first tracker and the second tracker may be used as a measure of how well the linear motion model performs and may in turn be used to control the process noise. In more detail, the spatial overlap between a predicted or updated object area of an object track provided by the first tracker and a motion area of a corresponding motion track of the second tracker is taken as a measure of how well the linear motion model currently performs for tracking the object. The larger the spatial overlap, the better the performance of the linear motion model. A decrease in the spatial overlap is an indication that the performance of the linear motion model is worsening, and that therefore the process noise should be increased to accommodate the current non-linear motion of the object. Conversely, an increase in the spatial overlap is an indication that the performance of the linear motion model is improving, and that process noise therefore safely may be decreased.

The first, second and third aspects may generally have the same features and advantages. It is further noted that the invention relates to all possible combinations of features unless explicitly stated otherwise.

By an *object area* is meant an area in an image frame where the object is located according to the first tracker. The object area in an image frame is first predicted and then updated in view of a detection area (if available) by the first tracker. The object areas where the object is located in the image frames together form *a track of the object*.

By a *detection area* is meant an area in an image frame where an object has been detected, for example by using an object detector which is able to detect objects of specific types or classes, such as persons, vehicles, etc. Each of the object area and the detection area may be given by a bounding box in the image frame.

*By a motion area* is meant an area in an image frame where motion is present. The motion may have been detected by a motion detector, for instance by detecting a change or difference in pixel values in relation to a previous image frame or a background model. Notably, the motion detector is able to detect the presence of motion, i.e., that something is moving, but it is not able to tell what is moving. That is, unlike the object detector, it is not able to detect an object of a specific type or class. The second tracker performs tracking using the motion areas in the image frames as input. Motion areas in the image frames which have been associated to belong to the same track by the second tracker are referred to herein as *a track of motion.*

By *a spatial overlap* between an object area and a motion area in an image frame is meant a degree by which the object area and the motion area overlaps spatially in the image frame. The spatial overlap may be given in terms of a value in the range 0-1, where 0 indicates no overlap, and 1 indicates a complete overlap.

The first tracker and the second tracker may provide an object area and a motion area, respectively, for each image frame of the sequence or for only some of the image frames therein. For a *set of image frames forming of a subsequence of the sequence of image frames* both the first tracker and the second tracker provides an output in the form of an object area and a motion area, respectively.

By *a linear motion model* is meant a model which describes the motion of an object in terms of a linear function. In particular, it may refer to a model which models the temporal evolution of a state of the object in the sequence of image frames from one time point, corresponding to one image frame in the sequence, to another time point, corresponding to a subsequent image frame in the sequence, by a linear function. For example, the linear motion model may model the temporal evolution from one image frame to the next image frame in the sequence. In particular, the linear motion model may be a constant velocity model, i.e., a model which assumes that the object moves at a constant velocity. As such, the linear motion model may be used to predict the state of the object in the subsequent image frame given the state of the object in a current image frame. In particular, it may be used to predict an object area where the object is located in the subsequent image frame. The state of the object may for instance be described by a state vector which includes position, velocity, size, and rate of change of the size of the object in the image frames. The position and size of the object together define an object area where the object is located in the image frame. Sometimes a linear motion model may be referred to as a linear kinematics model or a linear dynamic model.

The linear motion model is associated with a *process noise.* The process noise is typically an additive noise term in the linear motion model, i.e., in the linear function which describes the temporal evolution of the state of the object. The process noise is a random variable having a statistical distribution, such as a Gaussian distribution.

The process noise defines *an uncertainty* of the linear motion model. In particular, it defines the uncertainty of the linear motion model's prediction of the state of the object in the subsequent image frame given the state of the object in the current image frame. The larger the uncertainty, the less precise or reliable is the prediction. This uncertainty is quantified by the statistical distribution of the process noise. For example, for a process noise having a Gaussian distribution, the uncertainty is quantified by the covariance matrix.

The uncertainty defined by the process noise further controls the balance between the predicted state of the object (which includes the predicted object area) and the observed state (i.e., the detection area) of the object in the stage where the first tracker updates the predicted state. The higher the uncertainty, the less is the weight given to the predicted state and the higher is the weight given to the observed state. Thus, one may say that the *degree* to which the detection area of the object is taken into account when updating the object area increases with increasing uncertainty of the linear motion model.

Brief description of the drawings

The above, as well as additional objects, features and advantages of the present invention, will be better understood through the following illustrative and non-limiting detailed description of embodiments of the present invention, with reference to the appended drawings, where the same reference numerals will be used for similar elements, wherein:

Fig. 1 schematically illustrates an apparatus for tracking an object in a sequence of image frames according to embodiments.

Fig. 2 is a flow chart of a method for tracking an object in a sequence of image frames according to embodiments.

Fig. 3 schematically illustrates a first example of a sequence of image frames in which a first and a second tracker has determined a track of an object and a track of motion, respectively.

Fig. 4 schematically illustrates a second example of a sequence of image frames in which a first and a second tracker has determined a track of an object and a track of motion, respectively.

Detailed description of embodiments

The present invention will now be described more fully hereinafter with reference to the accompanying drawings, in which embodiments of the invention are shown. The systems and devices disclosed herein will be described during operation.

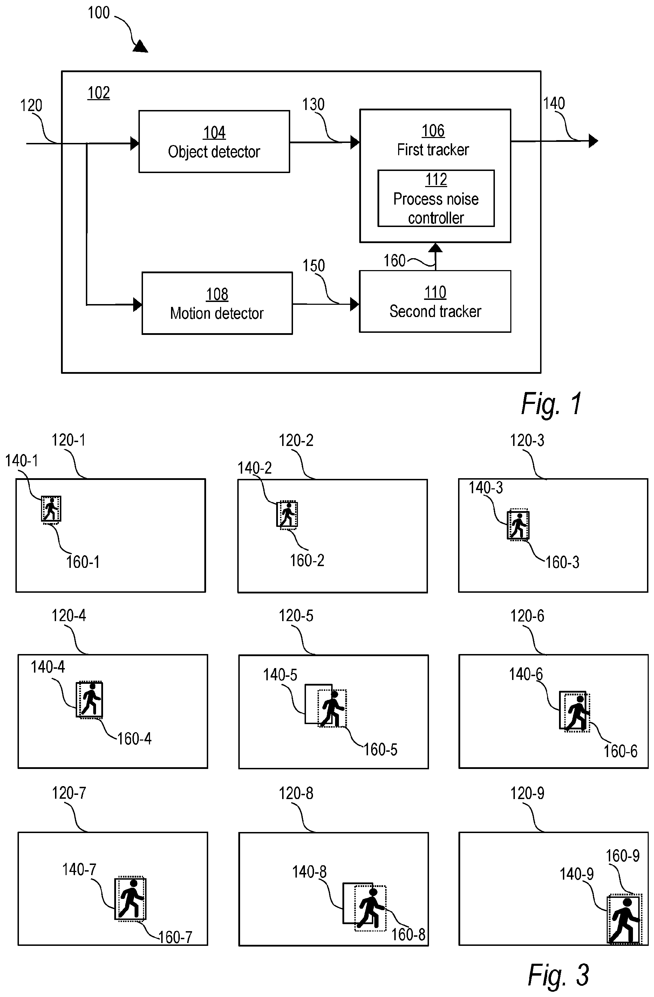

Fig. 1 illustrates an apparatus 100 for tracking an object in a sequence of image frames. The apparatus comprises circuitry 102 which is configured to carry out a method for tracking an object in a sequence of image frames. The circuitry 102 is configured to execute different functions of the apparatus 100. These functions correspond to an object detector 104, a first tracker 106, a motion detector 108, a second tracker 110, and a process noise controller 112 which may be included in the first tracker 106.

In a hardware implementation, each of the functions 104, 106, 108, 110, 112 may correspond to circuitry which is dedicated and specifically designed to execute the function. The circuitry may be in the form of one or more integrated circuits, such as one or more application specific integrated circuits or one or more field-programmable gate arrays. By way of example, the first tracker 106 may thus comprise circuitry which, when in use, determines a track of an object in a sequence of image frames.

In a software implementation, the circuitry may instead be in the form of a processor, such as a microprocessor, which in association with computer code instructions stored on a (non-transitory) computer-readable medium, such as a non-volatile memory, causes the apparatus to carry out any method disclosed herein. Examples of non-volatile memory include read-only memory, flash memory, ferroelectric RAM, magnetic computer storage devices, optical discs, and the like. In a software case, the functions 104, 106, 108, 110, 112 may thus each correspond to a portion of computer code instructions stored on the computer-readable medium, that, when executed by the processor, causes the apparatus 100 to execute the function.

It is further understood that a some of the functions 104, 106, 108, 110, 112 are purely implemented in hardware, and others in software which is stored on a computer-readable medium and executed by a processor.

When in use, a sequence of image frames 120 is input to the apparatus 100. The sequence of image frames is input to the object detector 104 which is configured to detect objects in the image frames. The object detector may detect objects in each image frame but may also operate at a lower frame rate to detect object in every n:th image frame, where n>1. The object detector 104 may take a single image frame as input and provide object detections 130 of one or more objects in the image frame as output. An object detection may be in the form of an area in the image frame where the object is detected, referred to herein as a detection area, and may be given in the form of a bounding box. In addition to a detection area, the object detector 104 may provide further information of the object detection, such as object class and confidence score of the object classification. The object detector 104 may be configured to detect objects of one or more specific types or object classes, such as persons, vehicles, etc. For this purpose, the object detector 104 may detect objects by extracting features in the image frame. That is, it may detect objects based on their appearance in the image frame. Accordingly, the detections of the object detector 104 may be said to be feature-based or appearance-based object detections. For example, the object detector 104 may implement a deep learning model which has been trained to recognize features in the image frame that correspond to objects of one or more specific object classes of interest. Many such models are known in the art, such as the YOLO object detector (https://arxiv.org/abs/1506.02640) which implements a convolutional neural network for this task.

The object detections 130 from the object detector 104 are input to the first tracker 106 which operates according to a tracking-by-detection principle to output object tracks 140 of objects in the sequence of image frames 120. Each object track 140 includes areas in which the first tracker 106 considers the object to be located in image frames of the sequence 120, referred to herein as object areas. In one example, the first tracker 106 determines an object area for each image frame in the sequence of image frames 120. In another example, the first tracker 106 determines an object area for those image frames in which the object detector 104 has made a detection of the object. Additionally, the first tracker 106 determines an object area for those image frames when it receives an input from the second tracker 160 for the purpose of adjusting a process noise of the first tracker 106.

Generally, the first tracker 106 implements a tracking filter which estimates a state of an object from the object detections 130 provided by the object detector 104. By way of example, the tracking filter may be a Kalman filter or a particle filter. In particular, the tracking filter may estimate a statistical distribution of the state of the object, for example expressed in terms of its mean vector and covariance matrix in the case of a Gaussian distribution. The tracking filter models the dynamics of the object by using a linear motion model. The state of the object may be defined by its object area (bounding box) such as its position ($x1$, $y1$), width h1 and height h2, a velocity vector ($vx$, $vy$), and a rate of change of the size ($vh1$,

*vh*2). It is understood that other definitions of the state are possible, such as the positions of two diagonal corners of the object area together with a velocity vector. Let x = (*x*1, *y*1, *h*1, *h*2, *vx, vy, vh*1, *vh*2) denote a state vector of the object. Then the motion dynamics of the object can be modelled by the following linear motion model:

$$x^t = F^t x^{t-1} + w^t, \quad \text{(Equation 1)}$$

where $F^t$ is a state transition matrix applied to the previous state vector of the object, and $w^t$ is a process noise that may be assumed to follow a zero mean multivariate Gaussian distribution with covariance matrix $Q^t$ according to the following:

$$w^t \sim N(0, Q^t), \quad \text{(Equation 2)}$$

where covariance matrix $Q^t$ depends on the time interval $\Delta t$ between the current time point $t$ and the previous time point $t$ - 1. Sometimes the process noise is also referred to as system noise.

As will be explained in more detail later on, the first tracker 106 uses the linear motion model to predict the state of the object at time $t$, corresponding to a current image frame, from the state of the object at a previous time point $t$ - 1, corresponding to a previous image frame. Moreover, in case the object detector 104 has made a detection of the object in the current image frame, i.e., it has observed the state of the object, the first tracker 106 updates the predicted state in view of the object detection. For this purpose, the first tracker 106 may use an observation model which models the observation of the state of the object with a linear transformation with another zero mean multivariate Gaussian distribution with covariance matrix $R^t$ according to:

$$z^t = H^t x^t + v^t, v^t \sim N(0, R^t), \quad \text{(Equation 3)}$$

where $H^t$ is the matrix that transforms the state of the object into its observation and $v^t$ is an additive detection noise.

The sequence of image frames 120 is further input to the motion detector 108. The motion detector 108 is configured to detect motion in the image frames and output motion detections 150, especially in the form of areas in the image frames where motion is present, referred to herein as motion areas. The motion detector may detect motion in each image frame but does typically operate at a lower frame rate to detect motion in every m:th image frame, where m>1. The frame rate at which the object detector 104 and the motion detector 108 operate may differ. For example, the object detector 104 may operate at a higher frame rate than the motion detector 108 and vice versa. Motion is present in an area when the pixel values in the area change over time, such as between consecutive image frames. The motion detector 108 may hence be configured to find motion areas by detecting changes in the image frames. For example, it may find motion areas by detecting changes between a current image frame in relation to a previous image frame in the sequence 120, by detecting changes between a current image frame and a background model (also known as background subtraction), or a combination of these approaches.

While both the motion detector 108 and the object detector 104 output areas in the image frames where objects potentially could be located, they do so by using different principles. The motion detector 108 finds areas of motion, i.e., pixel areas with changing pixel values, and the object detector 104 finds areas with features that correspond to specific classes of objects. Each of these principles have their advantages and disadvantages. For example, the motion detector 106 is only sensitive to motion which means that it will only be able to detect moving objects. This is in contrast to the object detector 104 which may detect both moving and stationary objects. Further, the motion detector 108 detects any moving objects, regardless of their appearance or object class, whereas the object detector 104 detector detects objects having a specific appearance or object class.

The motion detections 150 from the motion detector 108 are then input to the second tracker 110. The second tracker 110 forms one or more tracks from the motion detections 150 and provides these motion tracks 160 as output. The second tracker 110 may generally track the motion areas in the sequence of image frames. For example, it may associate motion areas in different image frames with each other as being likely to correspond to the same object motion. This may simply be based on spatial proximity of the motion areas in subsequent image frames, but it would also be possible to use a tracking filter, such as a Kalman filter. In the latter case, the tracking filter is preferably set to operate with a larger process noise than that of the first tracker 106, and/or to use an acceleration term in the state vector. This is possible since it is generally an easier problem to track motion areas than object detections, since the object detections in addition to moving objects include static objects which increases the risk of identity switches. As a result, the second tracker 110 will be better at handling non-linear motion. Each motion track 160 hence includes motion areas in which motion has been detected, for example in which a change has been detected in relation to a previous image frame or a background model. In one example, the motion track 160 includes motion areas for each image frame in the sequence 120. In another example, the motion track 106 includes motion areas for the image frames in which the motion detector 108 has detected motion.

The motion tracks 160 including the motion areas from the second tracker 110 are input to the first tracker 106, and in particular to the process noise controller 112 which in turn determines an adjusted process noise per tracked object to be used by the first tracker 106. As will be explained in more detail later on, the process noise controller 112 monitors over time spatial overlaps between object tracks 140 and motion tracks 160 to control the process noise of the first tracker 106. In particular, the process noise used in the tracking of an object is increased when it is found that the spatial overlap between an object track and the corresponding motion track decreases, and vice versa.

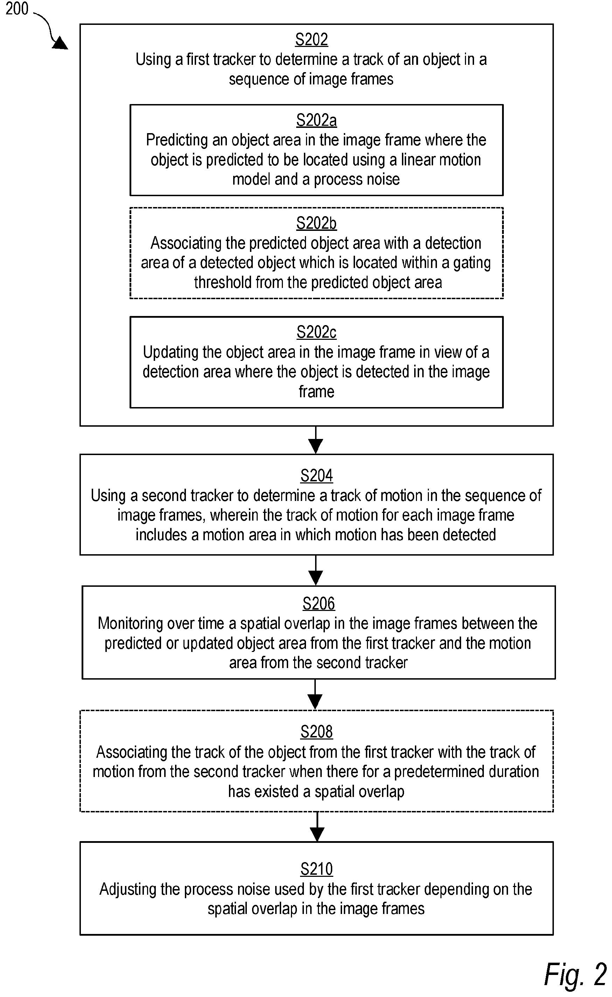

The operation of the apparatus 100 when carrying out a method 200 for tracking an object in a sequence of image frames will now be explained with reference to the flow chart of Fig. 2 and with further reference to Fig. 1 and Fig. 3. If several objects are tracked, it is understood that the method 200 may be applied for each tracked object.

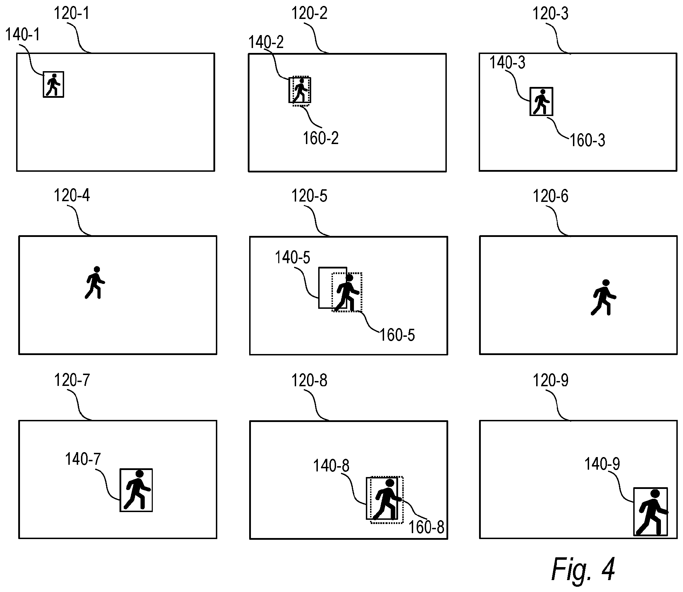

In step S202, the first tracker 106 is used to determine a track 140 of an object in a sequence of image frames 120. The object may be a person, a vehicle, or an object of any other object class that is of interest. In one example, the first tracker 106 operates at full frame rate, meaning that the track of the object includes an object area where the object is located for each image frame in the sequence 120. Fig. 3 shows a sequence of image frames 120-1 to 120-9 in which an object, in this case a person moving towards the camera, is tracked by the first tracker 106. The track of the object from the first tracker 106 includes an object area 140-1 to 140-9, shown with solid lines, in each of the image frames 120-1 to 120-9. In this case the object area is in the form of a bounding box in each image frame 120-1 to 120-9, but it is understood that the object areas may have any shape depending on which pixels depict the object. In another example, the first tracker 106 operates at a lower rate and is triggered to determine an object area for an image frame in response to receiving a detection of the object from the object detector 104. Additionally, it is triggered to determine an object area for an image frame in response to receiving an input from the second tracker 110 in the form of a motion area in the image frame where motion is present. This is illustrated in Fig. 4, in which the first tracker 106 is triggered to determine an object area 140-1, 140-3, 140-5, 140-7, 140-9 for every second image frame 120-1, 120-3, 120-5, 120-7, 120-9 due to a receipt of an object detection from the object detector 104, and additionally for image frames 120-2, 120-8 due to a receipt of a motion area 160-2, 160-8, shown with dashed lines, from the second tracker 110. In this example, for image frame 120-5 the first tracker 106 receives input from both the object detector 104 and the second tracker 110.

In these examples, there is hence a set of image frames forming of a subsequence of the sequence of image frames 120 in which there is both an object area from the first tracker 106 and a motion area from the second tracker 112. Accordingly, the track of the object 140 includes an object area where the object is located for each image frame in a set of image frames forming of a subsequence of the sequence of image frames. This set of image frames corresponds to the image frames for which the second tracker 110 provides a motion area as input to the first tracker 106. As explained, the track of the object 140 may include object areas for other image frames as well.

In order to determine the object area 140-i for an image frame 120-i, i=1, ..., 9, the first tracker 106 may carry out a number of sub-steps S202a, S202b, S202c. In sub-step S202a, the first tracker 106 predicts an object area in the image frame 120-i where the object is predicted to be located using a linear motion model associated with a process noise defining an uncertainty of the linear motion model. Equation 1 above gives an expression for the linear motion model, where $w^t$ is the process noise and the covariance matrix $Q^t$ of the process noise is a measure of the uncertainty of the linear motion model.

The prediction of the object area in the image frame may involve predicting a state of the object in the image frame from a state of the object in a previous image frame using the linear motion model and the process noise. As described above the state of the object may be defined by its object area, and by velocities describing how the object area moves and changes its size over time. Thus, when predicting the object area in the image frame 120-i, the first tracker 106 typically applies the linear motion model to the state of the object in a previous image frame. The previous image frame may be the image frame for which the first tracker 106 last determined an object area. In the example of Fig. 3, the previous image frame would hence be image frame 120-(i-1). In the example of Fig. 4, if the current frame is image frame 120-3, the previous image frame is image frame 120-2 while if the current frame is image frame 120-5, image frame 120-3 would be the previous image frame Denoting the state in the image frame by $x^t$ and the state in the previous image frame by $x^{t-1}$, the state of the object in the image frame can hence be predicted as:

$$\hat{x}^t = F^t x^{t-1}. \text{ (Equation 4)}$$

Recalling the definition of the state vector above, the first four states in the predicted state vector $\hat{x}^t$ defines the predicted object area in the image frame. In this step, a covariance matrix $P^t$ that measures the uncertainty of the state estimation may also be predicted using the following expression:

$$\hat{P}^t = F^t P^{t-1} (F^t)^T + Q^t, \text{ (Equation 5)}$$

where T denotes matrix transpose.

In case the first tracker 106 does not receive a detection of the object from the object detector 104 for the current image frame 120-i, where i the object area determined for the image frame 120-i corresponds to the predicted object area. However, it may also be the case that the first tracker 106 receives an object detection 130 of the object in the image frame 120-i from the object detector 104. The object detection 130 includes a detection area corresponding to the area in the image frame 120-i where the object is detected. For example, the detection area may be in the form of a bounding box. As previously explained, the detection area where the object is detected in the image frame is typically a feature-based object detection detected from a single image frame, in this case image frame 120-i. That is, the object detection is based on the appearance of the object which allows an object of a specific type or class to be detected. The received object detection 130 may further include a class of the object. In particular, when the object which is tracked by the first tracker 106 belongs to an object class (e.g., person, vehicle, etc.), the detection area relates to an object classified as belonging to that object class. By using the information about object class, the risk that an object detection relating to another class of objects is used to update the object track is reduced.

In sub-step S202c, in case the object is detected in the image frame 120-i, the first tracker 106 updates the object area in the image frame 120-i in view of the detection area where the object is detected in the image frame 120-i. In this step, a degree to which the detection area of the object is taken into account when updating the object area increases with increasing uncertainty of the linear motion model. Thus, when the uncertainty of the linear motion model is relatively high the detection is given a higher weight than when the uncertainty of the linear motion model is relatively low. This may be achieved when the updating of the object area includes calculating a linear combination of a location of the predicted object area and a location of the detection area in the image frame, wherein a weight of the location of the detection increases in relation to a weight of the location of the predicted object area as the uncertainty of the linear model increases. For example, when a Kalman tracker is used, the first tracker 106 may update the state of the object according to:

$$x^t = \hat{x}^t + K^t(z^t - H^t\hat{x}^t) = (I - K^tH^t)\hat{x}^t + K^tz^t, \text{ (Equation 6)}$$

where $K^t$ is a gain of the filter and $I$ is the unity matrix. The predicted state $\hat{x}^t$ is thus essentially updated by adding a certain proportion of the deviation between the observed state and the predicted state, where the added proportion is controlled by the filter gain. The filter gain hence acts as a weight or a matrix of weights which controls the degree to which the detection area is taken into account. On one extreme, when $K^tH^t$ is equal to the unity matrix, the updated state only depends on the observed state. On the other extreme, when $K^tH^t$ is the zero matrix, the updated state only depends on the predicted state. The filter gain in turn depends on the ratio between the process noise covariance $Q^t$ and the observation covariance $R^t$. Thus, in essence, the larger the process noise, the higher the degree to which the observed state (i.e., the detection area) is taken into account.

In between sub-steps S202a and S202c, there may be a sub-step S202b in which the first tracker 106 associates the predicted object area with a detection area of a detected object. This may be particularly useful in situations where the object detector 104 has detected several objects in the image frame and the first tracker 106 needs to determine which one is a detection of the tracked object, and thus should be used when updating the predicted object area as explained above.

When determining which object detection should be associated with the predicted object area of an object track, a gating threshold may be used to filter out object detections which are located far from the predicted object area. Thus, only object detections which are located at a distance which is smaller or equal to the gating threshold from the predicted object area will be considered as candidates for being associated with the predicted object area. For example, only object detections for which the center position of the detection area is located within a distance which is smaller or equal to the gating threshold from the center position of the predicted object area may be considered as candidates. Here, any other defined position, such as a corner position of the bounding box, could have been used. The gating threshold may in some cases depend on the predicted velocity. For example, the gating threshold may increase with increasing predicted velocity, and/or the gating threshold may be larger in the direction of the predicted velocity than in a direction which is perpendicular to the predicted velocity. Additionally, or alternatively, a second gating threshold may be used to filter out object detections having a size (e.g., size of the bounding box) which deviates from the size of the predicted object area by more than the second gating threshold. Thus, only object detections having a size difference compared to the predicted object area which is smaller or equal to the second gating threshold will be considered as candidates. Also, the second gating threshold may depend on the predicted velocity to increase with increasing predicted velocity.

Among the detection areas of the candidate object detection areas, one may then be selected to be associated with the predicted object area. The selection may for example be based on which detection area is most likely given the predicted object area and the uncertainty of the prediction given by the matrix $\hat{P}^t$ of Equation 5. The selection may additionally or alternatively be based on other criteria, such as similarity in appearance of the candidate object detection and the tracked object. Thus, in the end, the first tracker 106 will arrive at associating the predicted object area with a detection area of a detected object which is located within a gating threshold from the predicted object area. If there are several detection areas within the gating threshold, one of them is selected according to the criteria discussed above.

In step S204, the second tracker 110 is used to determine a track of motion 160 in the sequence of image frames 120. The track of motion 160 may correspond to the track of the object 140 from the first tracker 106 in that they correspond to the same physical object. The second tracker 110 operates on input from the motion detector 108 which detects motion in the image frames 120. For example, motion may be detected in a motion area by detecting a change in relation to a previous image frame or a background model. The track of motion 160 for each image frame in a set of image frames includes a motion area in which motion has been detected. Fig. 3 shows motion areas 160-1 to 160-9 in the image frames 120-1 to 120-9 using dashed lines. In that example, the track of motion 160 includes a motion area for each image frame in the sequence of image frames 120. The set of image frames hence includes all image frames 120-1 to 120-9. In Fig. 4, the track of motion instead includes a motion area 160-2, 160-5, 160-8 for every third image frame. In that case, the set of image frames is hence a subset of the image frames in the sequence of image frames and includes image frames 120-2, 120-5, 120-8. In the examples of Fig. 3 and Fig. 4 the motion areas are shown as bounding boxes, but it is understood that the motion areas may have any shape depending on which pixels exhibit motion.

As can be seen in Fig. 3 the object areas 140-1 to 140-9 from the first tracker 106 and the motion areas 160-1 to 160-9 from the second tracker 110 overlap spatially in the image frames 120-1 to 120-9. Similarly, in the example of Fig. 4 the object areas 140-2, 140-5 and 140-8 from the first tracker 106 and the motion areas 160-2, 160-5, 160-8 overlap spatially in the image frames 120-2, 120-5, 120-8. In some image frames the spatial overlap is larger and in others it is smaller. In step S206, the process noise controller 112 monitors over time the spatial overlap in the image frames in the set of image frames between the predicted or updated object area from the first tracker 106 and the motion area from the second tracker 110. Thus, in the example of Fig. 3 it will monitor the spatial overlap in each image frame 120-1 to 120-9, and in the example of Fig. 4 it will monitor the spatial overlap in image frames 120-2, 120-5, and 120-8. In more detail, the process noise controller 112 measures the spatial overlap in the set of image frames and keeps track of how it changes with time, e.g., to see whether it increases or decreases between image frames in the set. There are various ways of measuring a spatial overlap between two areas in an image. For example, the spatial overlap may be measured as an intersection-over-union between the predicted or updated object area 140-1 to 140-9 from the first tracker 106 and the motion area 160-1 to 160-9 from the second tracker 110. The intersection-over-union will provide a value between 0 and 1 for the spatial overlap, where 0 indicates no overlap and 1 indicates a complete overlap. In the example of Fig. 3, the spatial overlap remains stable in the first four image frames 120-1 to 120-4 and then decreases in the fifth image frame 120-5. Similarly, in the example of Fig. 4, the spatial overlap has decreased between image frames 120-2 and 120-5. The decrease of the spatial overlap may be seen as an indication that the linear motion model of the first tracker 106 has not been able to track the motion of the object, and that it may be appropriate to adjust the process noise to allow larger deviations from the linear motion model.

The examples of Fig. 3 and 4 only illustrate the tracking of one object. However, it could also be the case that there are several objects in the scene that are tracked simultaneously by the first tracker 106 and the second tracker 110. In that case, the process noise controller 112 also needs to determine which track of motion from the second tracker 110 that corresponds to the track of the object from the first tracker 106 in that they are tracks of the same physical object. In order to do so, the process noise controller 112 may determine the spatial-temporal overlap between the tracks from the first tracker 106 and the tracks from the second tracker 110. For example, it may determine whether there has been a spatial overlap between two tracks for a predetermined duration, such as for a predetermined time period or a predetermined number of frames. If this is the case, the two tracks are likely tracks of the same object. Thus, the process noise controller 112 may associate the track of the object from the first tracker 106 with the track of motion from the second tracker 110 when there for a predetermined duration has existed a spatial overlap in the image frames 120-1 to 120-9 between the predicted or updated object area 140-1 to 140-9 from the first tracker 106 and the motion area 160-1 to 160-9 from the second tracker 110. By way of example, suppose that the predetermined duration is set to three image frames in the example of Fig. 3. Then, since the two tracks overlap spatially in the first three frames 120-1 to 120-3, the track of the object from the first tracker will be associated with the track of motion from the second tracker after the first three frames. In reality, the predetermined duration may typically be larger than three image frames and may be set depending on various considerations, such as the frame rate at which the method operates.

To measure the existence of a spatial overlap, one may further apply an overlap threshold which is greater than or equal to zero. For example, it may be determined that a spatial overlap exists between the predicted or updated object area 140-1 to 140-9 from the first tracker 106 and the motion area 1601 to 160-9 from the second tracker 110 when a measured spatial overlap exceeds an overlap threshold. The overlap threshold is a tuning parameter which may tuned by applying the method to video data and adjusting the parameter until a desirable result is achieved. It may be set to balance the risks of erroneously associating tracks, which may happen if the overlap threshold is too low, and not finding a correct association, which may happen if the overlap threshold is too high. The severity of these risks may further depend on the monitoring situation. For example, a larger overlap threshold may be required in crowded scenes where the risk of erroneously associating tracks is higher than in scenes with fewer objects.

In step S210, the process noise controller 110 proceeds to adjust the process noise used by the first tracker depending on the spatial overlap in the image frames in the set of image frames to increase the uncertainty of the linear motion model as the spatial overlap decreases and decrease the uncertainty of the linear motion model as the spatial overlap increases. Notably, the process noise is adjusted per object being tracked by the first tracker 106. Thus, if several objects are tracked, different process noises are typically applied for different objects.

In more detail, in case the spatial overlap has decreased from a previous image frame to a current image frame, the uncertainty of the linear motion model to be used when processing a subsequent image frame is increased in relation to the uncertainty used when processing the current image frame. In case the spatial overlap instead has increased from the previous image frame to the current image frame, the uncertainty of the linear motion model to be used when processing a subsequent image frame is decreased in relation to the uncertainty used when processing the current image frame. In cases where a detection area corresponding to the tracked object is received from the object detector for the current image frame, the adjusted process noise could already be used in the current image frame when updating the object area although it would lead to a somewhat more complicated implementation.

Returning to the Fig. 3 example, the spatial overlap between the object areas 140-1 to 140-4 and the motion areas 160-1 to 160-4 remains essentially stable during the first four image frames 120-1 to 120-4 and no major adjustments of the process noise will hence be conducted. In the fifth image frame 120-5 the spatial overlap between the object area 140-5 and the motion area 160-5 has decreased substantially since the previous image frame 120-4. Therefore, the process noise is adjusted for the next image frame 120-6 to increase the uncertainty of the linear motion model, i.e., to allow larger deviations from the linear motion model. As a result, the first tracker 110 is able to better follow the non-linear motion of the object in the next image frame 120-6 and the spatial overlap between the object area 140-6 and the motion area 160-6 in the image frame 120-6 has increased in comparison to the image frame 120-5. This means that the process noise now may be somewhat decreased again to the following frame 120-7. In a similar way, the spatial overlap again increases in image frame 120-8 whereupon the uncertainty of the process noise is once again increased to better cope with the non-linear motion of the object. In the example of Fig. 4, the spatial overlap between the object area 140-5 and the motion area 160-8 in image frame 120-5 has decreased since the image frame 120-2. Therefore, the process noise is increased for the subsequent image frame 120-7 in which the first tracker 106 next determines an object area 140-7. As a result, the first tracker 106 has been able to better track the object in image frame 120-7. Since no motion area is available in image frame 120-7, the process noise is maintained at the same level when processing the next image frame 120-8. In image frame 120-8 the spatial overlap has increased since image frame 120-5 and the process noise can therefore again be decreased.

To implement these adjustments, the process noise used by the first tracker is adjusted to set the uncertainty of the linear motion model for a subsequent image frame in the sequence inversely proportional to the spatial overlap in a current image frame in the sequence. The process noise controller 112 calculates a process noise scaling factor $f^{t+1}$ for the subsequent image frame according to:

$$f^{t+1} = \frac{k}{(IoU)^t}, \text{ (Equation 7)}$$

where $(IoU)^t$ is the spatial overlap in the current image frame, here measured by the intersection-over-union, and $k$ is a constant. In case there is no spatial overlap, i.e., $IoU$ is zero, $f^{t+1}$ may be set to a value $f_{max}$ representing a maximum allowed scaling factor. The constant $k$ is an optional tuning factor which may be tuned by running the method on video data and adjusting the parameter until a desirable result is achieved. If such additional tuning is not desirable, k may be set to one.

The process noise used by the first tracker is then adjusted by scaling a covariance matrix of the process noise. This provides an easy way of increasing or decreasing the process noise. The process noise covariance matrix $Q^{t+1}$ at time $t + 1$ is set to:

$$Q^{t+1} = f^{t+1} Q_{default}, \text{ (Equation 8)}$$

where $f^{t+1}$ is the process noise scaling factor and $Q_{default}$ is a default covariance matrix of the process noise which depends on the prediction time step $\Delta t$ between time $t$ and $t + 1$ and serves as a base level uncertainty.

In some embodiments, it is further desirable to put limits on the adjustments of the uncertainty of the linear motion model to keep it within reasonable values, for instance in order to reduce the risks of identity switches when several objects are being tracked. Specifically, the uncertainty of the linear motion model may be increased or decreased within a range between a minimum and a maximum uncertainty value. By way of example, this may be achieved by setting a lower limit $f_{min}$ and an upper limit $f_{max}$ for the process noise scaling factor so that $f^{t+1}$ is restricted to the interval $[f_{min}, f_{max}]$. Thus, if the calculation of $f^{t+1}$ leads to a value which was larger than $f_{max}$, it will be restricted to be equal to $f_{max}$. Likewise, if the calculation of $f^{t+1}$ leads to a value which was smaller than $f_{min}$, it will be restricted to be equal to $f_{min}$.

The adjustment of the process noise of the first tracker does preferably not start until the track of the object of the first tracker 106 and the track of motion from the second tracker 110 have been associated with each other. Before then, one has not determined that the two tracks correspond to the same physical object. This is particularly important in scenes where multiple objects are present and are tracked at the same time. Accordingly, the adjustment of the process noise preferably starts when there for a predetermined duration has existed a spatial overlap in the image frames between the predicted or updated object area 140-1 to 140-9 from the first tracker 106 and the motion area 160-1 to 160-9 from the second tracker 110. For example, in Fig. 3 the adjustments may only start after the first three frames 120-1 to 120-3 in which there existed a spatial overlap between object areas 140-1 to 140-3 and motion areas 160-1 to 160-3.

In addition to adjusting the process noise, the process noise controller 112 may further adjust the gating threshold used in step S202b when associating a detection area with a predicted object area. In particular, the gating threshold may be adjusted depending on the spatial overlap between the predicted or updated object area 140-1 to 140-9 from the first tracker 106 and the motion area 160-1 to 160-9 from the second tracker 110 to increase the gating threshold as the spatial overlap decreases and decrease the gating threshold as the spatial overlap increases. For example, the gating threshold may be set to be inversely proportional to the spatial overlap. In this way, in the association step S202b, more detection areas will be considered as candidates for being associated with the predicted object area when the spatial overlap decreases. As a result, the risk of no detection area being associated with the predicted object area, and in turn the risk of losing the track, is reduced during time periods when the predictive performance of the linear motion model is poor. Conversely, less candidates will be considered for being associated with the predicted object area when the spatial overlap increases, i.e., when the predictive performance of the linear motion model is better. As a result, during time periods when the linear motion model performs well, the risk of erroneous associations is reduced. The adjusted gating threshold may be used in the subsequent image frame, or, optionally already in the current image frame in cases where the spatial overlap is measured between a predicted object area and the motion area.

It will be appreciated that a person skilled in the art can modify the above-described embodiments in many ways and still use the advantages of the invention as shown in the embodiments above. Thus, the invention should not be limited to the shown embodiments but should only be defined by the appended claims. Additionally, as the skilled person understands, the shown embodiments may be combined.

## Claims

1. A method (200) for tracking an object in a sequence of image frames, comprising:
using (S202) a first tracker (106) to determine a track of an object (140) in a sequence of image frames (120), wherein the track of the object includes an object area (140-5) where the object is located for each image frame (120-5) in a set of image frames forming of a subsequence of the sequence of image frames (120), the object area (140-5) for an image frame (120-5) being determined by:

predicting (S202a) an object area in the image frame (120-5) where the object is predicted to be located using a linear motion model which describes a motion of the object by a linear function and includes an additive process noise having a covariance matrix quantifying an uncertainty of the linear motion model, and
in case the object is detected in the image frame, updating (S202c) the object area in the image frame (120-5) in view of a detection area where the object is detected in the image frame, wherein a degree to which the detection area of the object is taken into account when updating the object area increases with increasing uncertainty of the linear motion model;
using (S204) a second tracker (110) to determine a track of motion (160) in the sequence of image frames (120), wherein the track of motion includes a motion area (160-5) in which motion has been detected for each image frame (120-5) in the set of image frames;
monitoring (S206) over time a spatial overlap in the image frames in the set of image frames between the predicted or updated object area (140-5) from the first tracker (106) and the motion area (160-5) from the second tracker (110); and
adjusting (S210) the process noise used by the first tracker (106) by rescaling a covariance matrix of the process noise for a subsequent image frame (120-6) with a scaling factor which is inversely proportional to the spatial overlap in a current image frame (120-5) in the set of image frames, thereby increasing the uncertainty of the linear motion model as the spatial overlap decreases and decreasing the uncertainty of the linear motion model as the spatial overlap increases.

2. The method of claim 1, wherein the adjustment (S210) of the process noise starts when there for a predetermined duration has existed a spatial overlap in the image frames between the predicted or updated object area (140-5) from the first tracker (106) and the motion area (160-5) from the second tracker (110).

3. The method of claim 1 or 2, further comprising:
determining that the track of the object (140) from the first tracker (106) and the track of motion (160) from the second tracker (110) correspond to the same physical object when there for a predetermined duration has existed a spatial overlap in the image frames between the predicted or updated object area (140-5) from the first tracker and the motion area from the second tracker (160-5).

4. The method of claim 2 or 3, wherein it is determined that a spatial overlap exists between the predicted or updated object area (140-5) from the first tracker (106) and the motion area (160-5) from the second tracker (110) when a measured spatial overlap exceeds an overlap threshold.

5. The method of any one of the preceding claims, further comprising:

> associating (S202b) the predicted object area with a detection area of a detected object which is located within a gating threshold from the predicted object area,
> wherein the gating threshold is adjusted depending on the spatial overlap between the predicted or updated object area (140-5) from the first tracker (106) and the motion area (160-5) from the second tracker (110) to increase the gating threshold as the spatial overlap decreases and decrease the gating threshold as the spatial overlap increases.

6. The method of any one of the preceding claims, wherein the uncertainty of the linear motion model is increased or decreased within a range between a minimum and a maximum uncertainty value.

7. The method of any one of the preceding claims, wherein the spatial overlap is measured as an intersection-over-union between the predicted or updated object area (140-5) from the first tracker (106) and the motion area (160-5) from the second tracker (110).

8. The method of any one of the preceding claims, wherein the detection area where the object is detected in the image frame is a feature-based object detection detected from a single image frame.

9. The method of any one of the preceding claims, wherein the object which is tracked by the first tracker (106) belongs to an object class, and the detection area relates to an object classified as belonging to that object class.

10. The method of any one of the preceding claims, wherein updating (S202c) the object area includes calculating a linear combination of a location of the predicted object area and a location of the detection area in the image frame, wherein a weight of the location of the detection increases in relation to a weight of the location of the predicted object area as the uncertainty of the linear model increases.

11. The method of any one of the preceding claims, wherein predicting (S202a) an object area in the image frame involves predicting a state of the object in the image frame (120-5) from a state of the object in a previous image frame (120-4) in the sequence using the linear motion model and the process noise.

12. An apparatus (100) for tracking an object in a sequence of image frames, comprising circuitry (102) configured to carry out the method of any one of claims 1-11.

13. A non-transitory computer-readable medium comprising computer program code which, when executed by a device with processing capability, causes the device to carry out the method of any one of claims 1-11.

**Patentansprüche**

1. Verfahren (200) zum Verfolgen eines Objekts in einer Sequenz von Bild-Frames, umfassend:
Verwenden (S202) eines ersten Trackers (106), um eine Spur eines Objekts (140) in einer Sequenz von Bild-Frames (120) zu bestimmen, wobei die Spur des Objekts einen Objektbereich (140-5) enthält, in dem sich das Objekt für jeden Bild-Frame (120-5) in einem Satz von Bild-Frames befindet, der eine Teilsequenz der Sequenz von Bild-Frames (120) bildet, wobei der Objektbereich (140-5) für einen Bild-Frame (120-5) bestimmt wird durch:

> Vorhersagen (S202a) eines Objektbereichs im Bild-Frame (120-5), in dem sich das Objekt gemäß Vorhersage befinden soll, unter Verwendung eines linearen Bewegungsmodells, das eine Bewegung des Objekts durch eine lineare Funktion beschreibt und ein additives Prozessrauschen enthält, das eine Kovarianzmatrix aufweist, die eine Unsicherheit des linearen Bewegungsmodells quantifiziert, und falls das Objekt in dem Bild-Frame detektiert wird, Aktualisieren (S202c) des Objektbereichs in dem Bild-Frame (120-5) im Hinblick auf einen Detektionsbereich, in dem das Objekt in dem Bild-Frame detektiert wird, wobei ein Grad der Berücksichtigung des Detektionsbereichs des Objekts bei der Aktualisierung des Objektbereichs mit zunehmender Unsicherheit des linearen Bewegungsmodells zunimmt;

Verwenden (S204) eines zweiten Trackers (110), um eine Bewegungsspur (160) in der Sequenz von Bild-Frames (120) zu bestimmen, wobei die Bewegungsspur einen Bewegungsbereich (160-5) enthält, in dem Bewegung für jeden Bild-Frame (120-5) in dem Satz von Bild-Frames detektiert wurde;

Überwachen (S206) einer räumlichen Überlappung in den Bild-Frames in dem Satz von Bild-Frames im Zeitverlauf zwischen dem vorhergesagten oder aktualisierten Objektbereich (140-5) aus dem ersten Tracker (106) und dem Bewegungsbereich (160-5) aus dem zweiten Tracker (110); und

Anpassen (S210) des von dem ersten Tracker (106) verwendeten Prozessrauschens durch Neuskalieren einer Kovarianzmatrix des Prozessrauschens für einen nachfolgenden Bild-Frame (120-6) mit einem Skalierungsfaktor, der umgekehrt proportional zu der räumlichen Überlappung in einem aktuellen Bild-Frame (120-5) in dem Satz von Bild-Frames ist, wodurch die Unsicherheit des linearen Bewegungsmodells erhöht wird, wenn die räumliche Überlappung abnimmt, und die Unsicherheit des linearen Bewegungsmodells verringert wird, wenn die räumliche Überlappung zunimmt.

2. Verfahren nach Anspruch 1, wobei die Anpassung (S210) des Prozessrauschens beginnt, wenn es für eine vorbestimmte Dauer eine räumliche Überlappung in den Bild-Frames zwischen dem vorhergesagten oder aktualisierten Objektbereich (140-5) aus dem ersten Tracker (106) und dem Bewegungsbereich (160-5) aus dem zweiten Tracker (110) gegeben hat.

3. Verfahren nach Anspruch 1 oder 2, ferner umfassend:
Bestimmen, dass die Spur des Objekts (140) aus dem ersten Tracker (106) und die Bewegungsspur (160) aus dem zweiten Tracker (110) demselben physischen Objekt entsprechen, wenn es für eine vorbestimmte Dauer eine räumliche Überlappung in den Bild-Frames zwischen dem vorhergesagten oder aktualisierten Objektbereich (140-5) aus dem ersten Tracker und dem Bewegungsbereich aus dem zweiten Tracker (160-5) gegeben hat.

4. Verfahren nach Anspruch 2 oder 3, wobei bestimmt wird, dass es eine räumliche Überlappung zwischen dem vorhergesagten oder aktualisierten Objektbereich (140-5) aus dem ersten Tracker (106) und dem Bewegungsbereich (160-5) aus dem zweiten Tracker (110) gibt, wenn eine gemessene räumliche Überlappung eine Überlappungsschwelle überschreitet.

5. Verfahren nach einem der vorhergehenden Ansprüche, ferner umfassend: Assoziieren (S202b) des vorhergesagten Objektbereichs mit einem Detektionsbereich eines detektierten Objekts, der sich innerhalb einer Gating-Schwelle von dem vorhergesagten Objektbereich befindet,
wobei die Gating-Schwelle in Abhängigkeit von der räumlichen Überlappung zwischen dem vorhergesagten oder aktualisierten Objektbereich (140-5) aus dem ersten Tracker (106) und dem Bewegungsbereich (160-5) aus dem zweiten Tracker (110) angepasst wird, um die Gating-Schwelle zu erhöhen, wenn die räumliche Überlappung abnimmt, und die Gating-Schwelle zu verringern, wenn die räumliche Überlappung zunimmt.

6. Verfahren nach einem der vorhergehenden Ansprüche, wobei die Unsicherheit des linearen Bewegungsmodells innerhalb eines Bereichs zwischen einem minimalen und einem maximalen Unsicherheitswert erhöht oder verringert wird.

7. Verfahren nach einem der vorhergehenden Ansprüche, wobei die räumliche Überlappung als Schnittpunkt-über-Vereinigung zwischen dem vorhergesagten oder aktualisierten Objektbereich (140-5) aus dem ersten Tracker (106) und dem Bewegungsbereich (160-5) aus dem zweiten Tracker (110) gemessen wird.

8. Verfahren nach einem der vorhergehenden Ansprüche, wobei der Detektionsbereich, in dem das Objekt in dem Bild-Frame detektiert wird, eine merkmalsbasierte Objektdetektion ist, die aus einem einzelnen Bild-Frame detektiert wird.

9. Verfahren nach einem der vorhergehenden Ansprüche, wobei das Objekt, das durch den ersten Tracker (106) verfolgt wird, zu einer Objektklasse gehört und sich der Detektionsbereich auf ein Objekt bezieht, das als zu dieser Objektklasse gehörend klassifiziert wird.

10. Verfahren nach einem der vorhergehenden Ansprüche, wobei die Aktualisierung (S202c) des Objektbereichs das Berechnen einer linearen Kombination einer Position des vorhergesagten Objektbereichs und einer Position des Detektionsbereichs im Bild-Frame enthält, wobei ein Gewicht der Position der Detektion in Bezug auf ein Gewicht der Position des vorhergesagten Objektbereichs mit zunehmender Unsicherheit des linearen Modells zunimmt.

11. Verfahren nach einem der vorhergehenden Ansprüche, wobei das Vorhersagen (S202a) eines Objektbereichs in dem Bild-Frame das Vorhersagen eines Zustands des Objekts in dem Bild-Frame (120-5) aus einem Zustand des Objekts in einem vorhergehenden Bild-Frame (120-4) in der Sequenz unter Verwendung des linearen Bewegungsmodells und des Prozessrauschens beinhaltet.

12. Vorrichtung (100) zum Verfolgen eines Objekts in einer Sequenz von Bild-Frames, umfassend eine Beschaltung (102), die konfiguriert ist, das Verfahren nach einem der Ansprüche 1-11 durchzuführen.

13. Nichtflüchtiges computerlesbares Medium, umfassend Computerprogrammcode, der, wenn er durch eine Einrichtung mit Verarbeitungsfähigkeit ausgeführt wird, die Einrichtung dazu veranlasst, das Verfahren nach einem der Ansprüche 1-11 durchzuführen.

## Revendications

1. Procédé (200) de suivi d'un objet dans une séquence de trames d'images, comprenant :
   l'utilisation (S202) d'un premier suiveur (106) pour déterminer une trajectoire d'un objet (140) dans une séquence de trames (120) d'image, la trajectoire de l'objet comprenant une zone (140-5) d'objet où l'objet est situé pour chaque trame (120-5) d'image dans un ensemble de trames d'image formant une sous-séquence de la séquence de trames (120) d'image, la zone (140-5) d'objet pour une trame (120-5) d'image étant déterminée par :

   la prédiction (S202a) d'une zone d'objet dans la trame (120-5) d'image où il est prévu que l'objet soit situé à l'aide d'un modèle de mouvement linéaire qui décrit un mouvement de l'objet par une fonction linéaire et comprend un bruit de processus additif présentant une matrice de covariance qui quantifie une incertitude du modèle de mouvement linéaire, et
   dans le cas où l'objet est détecté dans la trame d'image, la mise à jour (S202c) de la zone d'objet dans la trame (120-5) d'image au vu d'une zone de détection où l'objet est détecté dans la trame d'image, le degré de prise en compte de la zone de détection de l'objet lors de la mise à jour de la zone d'objet augmentant avec l'incertitude croissante du modèle de mouvement linéaire ;
   l'utilisation (S204) d'un second suiveur (110) pour déterminer une trajectoire (160) de mouvement dans la séquence de trames (120) d'image, la trajectoire de mouvement comprenant une zone (160-5) de mouvement dans laquelle un mouvement a été détecté pour chaque trame (120-5) d'image de l'ensemble de trames d'image ;
   la surveillance (S206) au fil du temps d'un chevauchement spatial dans les trames d'image de l'ensemble de trames d'image entre la zone (140-5) d'objet prédite ou mise à jour provenant du premier suiveur (106) et la zone (160-5) de mouvement provenant du second suiveur (110) ; et
   l'ajustement (S210) du bruit de processus utilisé par le premier suiveur (106) par redimensionnement d'une matrice de covariance du bruit de processus pour une trame (120-6) d'image suivante avec un facteur de mise à l'échelle inversement proportionnel au chevauchement spatial dans une trame (120-5) d'image courante de l'ensemble de trames d'image, augmentant ainsi l'incertitude du modèle de mouvement linéaire à mesure que le chevauchement spatial diminue et diminuant l'incertitude du modèle de mouvement linéaire à mesure que le chevauchement spatial augmente.

2. Procédé selon la revendication 1, l'ajustement (S210) du bruit de processus commençant lorsqu'il existe, pendant une durée prédéterminée, un chevauchement spatial dans les trames d'image entre la zone (140-5) d'objet prédite ou mise à jour provenant du premier suiveur (106) et la zone (160-5) de mouvement provenant du second suiveur (110).

3. Procédé selon la revendication 1 ou 2, comprenant en outre :
   le fait de déterminer que la trajectoire de l'objet (140) provenant du premier suiveur (106) et la trajectoire (160) de mouvement provenant du second suiveur (110) correspondent au même objet physique lorsqu'il existe, pendant une durée prédéterminée, un chevauchement spatial dans les trames d'image entre la zone (140-5) d'objet prédite ou mise à jour provenant du premier suiveur et la zone (160-5) de mouvement provenant du second suiveur.

4. Procédé selon la revendication 2 ou 3, dans lequel il est déterminé qu'un chevauchement spatial existe entre la zone (140-5) d'objet prédite ou mise à jour provenant du premier suiveur (106) et la zone (160-5) de mouvement provenant du second suiveur (110) lorsqu'un chevauchement spatial mesuré dépasse un seuil de chevauchement.

**5.** Procédé selon l'une quelconque des revendications précédentes, comprenant en outre :

l'association (S202b) de la zone d'objet prédite à une zone de détection d'un objet détecté qui est située dans un seuil de crénelage de la zone d'objet prédite,
le seuil de déclenchement étant ajusté en fonction du chevauchement spatial entre la zone (140-5) d'objet prédite ou mise à jour provenant du premier suiveur (106) et la zone (160-5) de mouvement provenant du second suiveur (110) pour augmenter le seuil de déclenchement à mesure que le chevauchement spatial diminue et pour diminuer le seuil de déclenchement à mesure que le chevauchement spatial augmente.

**6.** Procédé selon l'une quelconque des revendications précédentes, l'incertitude du modèle de mouvement linéaire étant augmentée ou diminuée dans une plage comprise entre une valeur d'incertitude minimale et une valeur d'incertitude maximale.

**7.** Procédé selon l'une quelconque des revendications précédentes, le chevauchement spatial étant mesuré comme un rapport intersection sur union entre la zone (140-5) d'objet prédite ou mise à jour provenant du premier suiveur (106) et la zone (160-5) de mouvement provenant du second suiveur (110).

**8.** Procédé selon l'une quelconque des revendications précédentes, la zone de détection où l'objet est détecté dans la trame d'image étant une détection d'objet basée sur des caractéristiques détectée à partir d'une trame d'image unique.

**9.** Procédé selon l'une quelconque des revendications précédentes, l'objet qui est suivi par le premier suiveur (106) appartenant à une classe d'objets, et la zone de détection se rapportant à un objet classé comme appartenant à cette classe d'objets.

**10.** Procédé selon l'une quelconque des revendications précédentes, la mise à jour (S202c) de la zone d'objet comprenant le calcul d'une combinaison linéaire d'un emplacement de la zone d'objet prédite et d'un emplacement de la zone de détection dans la trame d'image, un poids de l'emplacement de la détection augmentant par rapport à un poids de l'emplacement de la zone d'objet prédite lorsque l'incertitude du modèle linéaire augmente.

**11.** Procédé selon l'une quelconque des revendications précédentes, la prédiction (S202a) d'une zone d'objet dans la trame d'image faisant intervenir la prédiction d'un état de l'objet dans la trame (120-5) d'image à partir d'un état de l'objet dans une trame (120-4) d'image précédente dans la séquence à l'aide du modèle de mouvement linéaire et du bruit de processus.

**12.** Appareil (100) de suivi d'un objet dans une séquence de trames d'image, comprenant un circuit (102) configuré pour réaliser le procédé selon l'une quelconque des revendications 1 à 11.

**13.** Support non transitoire lisible par ordinateur comprenant du code de programme informatique qui, lorsqu'il est exécuté par un dispositif doté d'une capacité de traitement, amène le dispositif à réaliser le procédé selon l'une quelconque des revendications 1 à 11.

100

102

120

130

140

104
Object detector

106
First tracker

112
Process noise controller

160

108
Motion detector

150

110
Second tracker

*Fig. 1*

120-1

140-1

160-1

120-2

140-2

160-2

120-3

140-3

160-3

120-4

140-4

160-4

120-5

140-5

160-5

120-6

140-6

160-6

120-7

140-7

160-7

120-8

140-8

160-8

120-9

160-9

140-9

*Fig. 3*

200

**S202**
Using a first tracker to determine a track of an object in a sequence of image frames

**S202a**
Predicting an object area in the image frame where the object is predicted to be located using a linear motion model and a process noise

**S202b**
Associating the predicted object area with a detection area of a detected object which is located within a gating threshold from the predicted object area

**S202c**
Updating the object area in the image frame in view of a detection area where the object is detected in the image frame

**S204**
Using a second tracker to determine a track of motion in the sequence of image frames, wherein the track of motion for each image frame includes a motion area in which motion has been detected

**S206**
Monitoring over time a spatial overlap in the image frames between the predicted or updated object area from the first tracker and the motion area from the second tracker

**S208**
Associating the track of the object from the first tracker with the track of motion from the second tracker when there for a predetermined duration has existed a spatial overlap

**S210**
Adjusting the process noise used by the first tracker depending on the spatial overlap in the image frames

*Fig. 2*

*Fig. 4*

**EP 4 657 373 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012154579 A1